# EUROPEAN PATENT APPLICATION

(11) **EP 3 855 029 A1**
(43) Date of publication of application: **28.07.2021**
(21) Application number: 20152777.7
(22) Date of filing: 21.01.2020
(51) Int. Cl.: F16B 35/06

(54) **THREADED FASTENER**

(71) Applicant: Hsu, Kuo-Tai, Tainan City 710 (TW); Hsu, Ming-Hao, 710 Tainan City (TW)
(72) Inventor: Hsu, Kuo-Tai, Tainan City 710 (TW); Hsu, Ming-Hao, 710 Tainan City (TW)
(74) Representative: Jannig & Repkow Patentanwälte PartG mbB

(57) **Abstract**

A threaded fastener (10) includes a head, a shank (11) extending from the head, and a cone portion (13). The head includes a top portion (12a) and an annular side wall (12c) extending downwardly from a periphery of the top portion. The cone portion is formed between the shank and the top portion and has a peripheral surface (131) tapering from the top portion to the shank. An annular groove (12d) is created between the annular side wall and the cone portion for development of an accommodating space with an opening (125) downward in a bottom (123) of the head. The annular groove (12d) is surrounded by an inner surface (121) of the annular side wall (12c), the peripheral surface (131) of the cone portion (13), and a bottom wall (122) of the top portion (12a) connected between the annular side wall (12c) and the cone portion (13).

## Description

### BACKGROUND OF THE INVENTION

### 1. Field of the Invention

The present invention relates to a threaded fastener and, more particularly, to a countersunk screw.

### 2. Description of the Related Art

Screws are common threaded fasteners which include different types. Amid these threaded fasteners, a so-called countersunk screw means that when the screw is fastened to a workpiece, its head is level with the surface of the workpiece.

However, a plank surface around a screw head bulges easily when a common countersunk screw is screwed in the plank surface. In most cases, when a plank is screwed and fastened by a screw, waste chips, which are being cut by and removed outward through the screw thread and accumulated in gaps between the screw and the plank, get stuck in underneath of the screw head and squeezed by the screw head such that a plank surface around the screw head bulges. In addition, a conventional countersunk screw is often provided with a cone portion below the screw head thereof to facilitate the digging of the accommodating space for the screw head to be buried. However, a bulge is observed on a plank surface when the plank which is being bored invasively is squeezed and stretched outward by the cone portion.

A screw as disclosed in the US Patent No. US9,624,961 includes a shank having an insertion tip and a head end spaced from the insertion tip along a longitudinal axis. The shank has a straight portion between the insertion tip and the head end. The head end includes an upper portion and a lower portion which is adjacent to an upper end of the straight portion and tapered toward the straight portion. A plurality of anti-screw-out teeth protrude from a circumferential surface of the lower portion. Each anti-screw-out tooth includes a guide face and a stop face, both of which intersect each other for development of a ridgeline. A recessed channel is formed between the stop face and the circumferential surface for receiving wood chips. At a bottom of the upper portion is circumferentially designed a pointed cutting portion by which wood chips or debris can be cut. A slope is provided on an inner side of the cutting portion, and a recess is formed between the cutting portion and the circumferential surface of the top end of the lower portion. When the screw is screwed into a plank for development of a drilled hole, wood chips released from the drilled hole are accommodated in the recessed channel or the recess for good flatness of a surface of the plank in which the screw is fastened. However, the recess formed between the cutting portion and the circumferential surface of the lower portion is a V-shaped groove, and is unsatisfactory in its accommodating volume. Thus, when a plank is cut by the pointed cutting portion, wood chips will still accumulate outside the recess and the squeezed plank bulges around the head end of the screw. Accordingly, the flatness of the plank surface is poor because of bulges between the head end of the screw and the plank surface.

### BRIEF SUMMARY OF THE INVENTION

It is an objective of the present invention to provide a threaded fastener including a head with an annular groove therein such that more waste chips can be accommodated in the annular groove and no bulge is detected on a workpiece surface when the threaded fastener is screwed in a workpiece.

To achieve this and other objectives, a threaded fastener of the present invention includes a head, a shank, and a cone portion. The shank extends from the head and defines a longitudinal axis. A thread is provided on the shank. The head includes a top portion and an annular side wall extending downwardly from a periphery of the top portion along the longitudinal axis. The cone portion is formed between the shank and the top portion and has a peripheral surface tapering from the top portion to the shank. An annular groove is created between the annular side wall of the head and the cone portion for development of an accommodating space with an opening downward. The annular groove is surrounded by an inner surface of the annular side wall, the peripheral surface of the cone portion, and a bottom wall of the top portion connected between the annular side wall and the cone portion. The bottom wall of the top portion extends in a radial direction of the head and separates the annular side wall from the cone portion.

In an embodiment, the accommodating space in the annular groove has a trapezoid cross section.

In an embodiment, the inner surface of the annular side wall is developed as a slope, and an edge portion is formed at a lower end of the annular side wall.

In an embodiment, a serrated edge portion is formed at a lower end of the annular side wall.

In an embodiment, the peripheral surface of the cone portion is provided with a plurality of ribs extending in the radial direction.

In contrast to prior arts, a threaded fastener of the present invention features advantages as follows:
1. An annular groove is designed in a bottom of the head of the threaded fastener and characteristic of a bottom wall of the top portion of the head through which the annular side wall and the cone portion are separated from each other for development of a larger accommodating space in the annular groove. When a plank is bored by the threaded fastener invasively and downward, the accommodating space holds more waste chips in the annular groove for no bulge around the threaded fastener's head due to waste chips squeezed by the head.
2. With an approximately trapezoid accommodating space inside, the annular groove of the threaded fastener accommodates a bulge on a plank surface stretched and squeezed by the cone portion of the threaded fastener outward for no bulge around threaded fastener's head after both the threaded fastener and the plank are coupled with each other.
3. With the inner surface of the annular side wall developed as a slope and spaced from the cone portion for a larger accommodating space in the annular groove, waste chips cut by the annular side wall are held in the annular groove directly for no waste chips accumulated.

The present invention will become clearer in light of the following detailed description of illustrative embodiments of this invention described in connection with the drawings.

### DESCRIPTION OF THE DRAWINGS

FIG. 1 is a schematic view of a threaded fastener according to a first embodiment of the present invention.
FIG. 2 is a cross-sectional view of the threaded fastener in FIG. 1.
FIG. 3 is a sectional view taken along line 3-3 of FIG. 1.
FIG. 4 is a schematic view of a threaded fastener according to a second embodiment of the present invention.
FIG. 5 is a cross-sectional view of the threaded fastener in FIG. 4.
FIG. 6 is a schematic view of a threaded fastener according to a third embodiment of the present invention.
FIG. 7 is a schematic, perspective view of the threaded fastener in FIG. 6.
FIG. 8 is a bottom view illustrating the cross section of the threaded fastener in FIG. 6.
FIG. 9 is a schematic view of a threaded fastener according to a fourth embodiment of the present invention.
FIG. 10 is a schematic perspective view of the threaded fastener in FIG. 9.
FIG. 11 is a sectional view taken along line 11-11 of FIG. 9.
FIG. 12 is a schematic view illustrating the threaded fastener in FIG. 9 screwed in a workpiece.

All figures are drawn for ease of explanation of the basic teachings of the present invention only; the extensions of the figures with respect to number, position, relationship, and dimensions of the parts to form the preferred embodiments will be explained or will be within the skill of the art after the following teachings of the present invention have been read and understood.

Where used in the various figures of the drawings, the same numerals designate the same or similar parts. Furthermore, when the terms "inner", "side", "end", "portion", "top", "bottom", "annular", "longitudinal", "downwardly", "radial", "length", and similar terms are used herein, it should be understood that these terms have reference only to the structure shown in the drawings as it would appear to a person viewing the drawings and are utilized only to facilitate describing the invention.

### DETAILED DESCRIPTION OF THE INVENTION

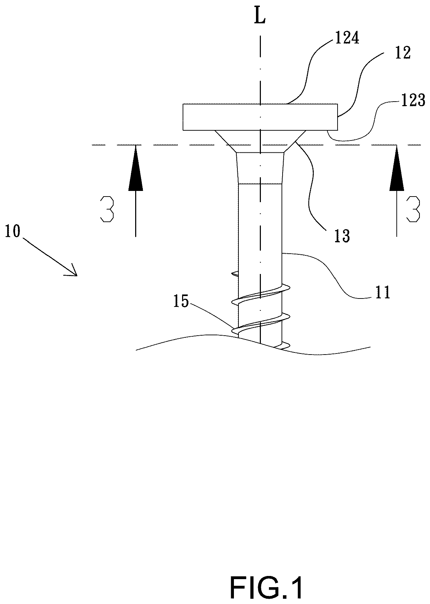

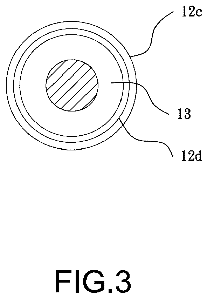

A threaded fastener 10 according to a first embodiment of the present invention is shown in FIGS. 1 through 3 of the drawings and includes a head 12, a shank 11 extending from the head 12, and a cone portion 13. The shank 11 defines a longitudinal axis L and is provided with at least one thread 15. The head 12 includes a top portion 12a and an annular side wall 12c integrally developed on a periphery of the top portion 12a and extending downwardly toward the shank 11 along the longitudinal axis L. The cone portion 13 is formed between the shank 11 and the top portion 12a and has a peripheral surface 131 tapering from the top portion 12a to the shank 11. The top portion 12a of the head 12 has an outer diameter greater than the shank 11 and includes a top surface 124 in which a socket 14 to be inserted by a tool for driving the shank 11 to rotate is opened.

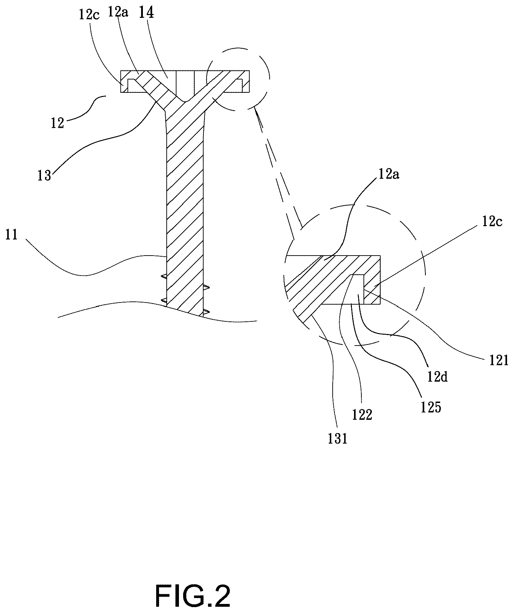

The threaded fastener 10 is characteristic of the head 12 in which an annular groove 12d is created between the annular side wall 12c of the head 12 and the cone portion 13 for development of an accommodating space with an opening 125 downward (see FIG. 2). In this embodiment, the annular groove 12d is formed in a bottom 123 of the head 12 and surrounded by an inner surface 121 of the annular side wall 12c, the peripheral surface 131 of the cone portion 13, and a bottom wall 122 of the top portion 12a connected between the annular side wall 12c and the cone portion 13 for development of the accommodating space with a trapezoid cross section (FIG. 2). In detail, the bottom wall 122 of the top portion 12a connected between the annular side wall 12c and the cone portion 13 extends in a radial direction of the head 12 perpendicular to the longitudinal axis L and separates the annular side wall 12c from the cone portion 13 for development of a larger accommodating space in the annular groove 12d. In a preferred embodiment, the bottom wall 122 has a radial length of 10% to 90% of a radial distance between the annular side wall 12c and the cone portion 13 in the radial direction. Accordingly, when the head 12 is screwed into a workpiece (for example, a plank), more waste chips are received in the accommodating space defined by the annular groove 12d, and no waste chips squeezed by the head 12 bulge around the head 12. Moreover, with the annular groove 12d having an approximately trapezoid cross section, the annular groove 12d can be used for accommodating the protrusions of the surface of the workpiece caused by the outward pull of the cone portion 13 such that no bulge attributed to compression of waste chips or a squeezed plank is detected around the head 12 for a planar workpiece surface when the threaded fastener 10 and the workpiece are coupled with each other.

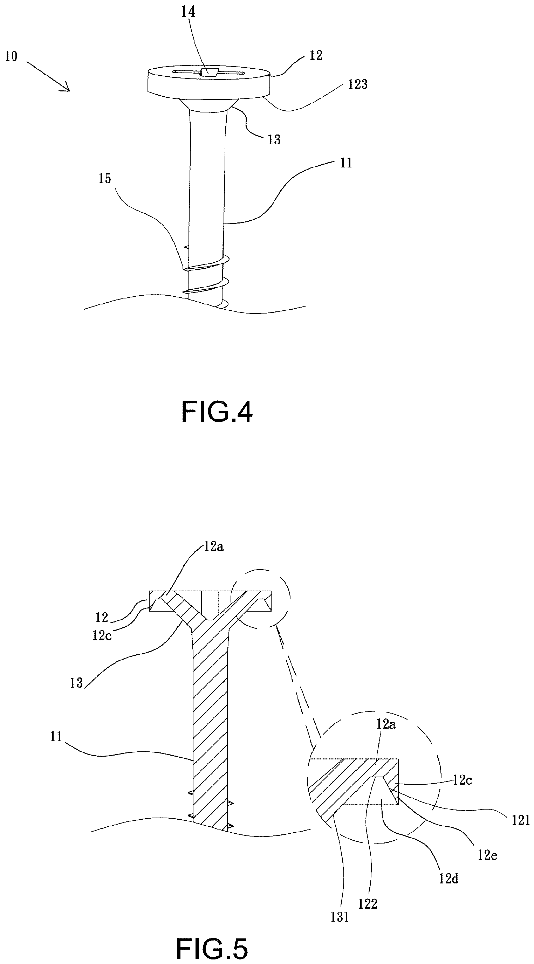

FIGS. 4 and 5 illustrate a threaded fastener 10 according to a second embodiment of the present invention modified from the first embodiment. In this embodiment, the inner surface 121 of the annular side wall 12c is developed as a slope for a larger accommodating space in the annular groove 12d, and a blade-like edge portion 12e is formed at a lower end of the annular side wall 12c. By cutting a workpiece with the edge portion 12e, the hole wall around a hole reamed by the cone portion 13 is cut and embellished smoothly for no bulge or corrugation at a drilled hole squeezed by the head 12.

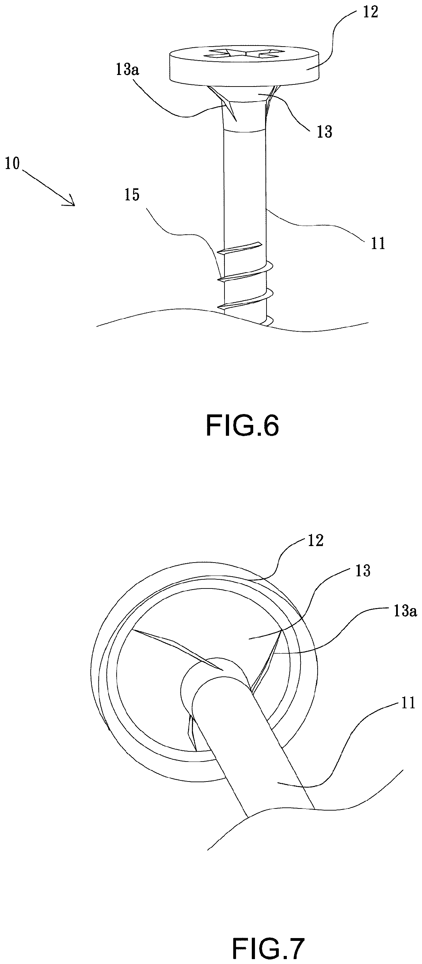

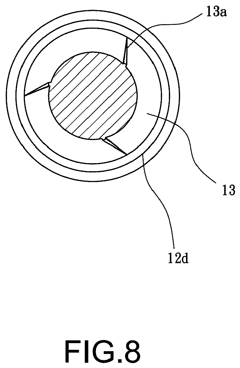

FIG. 6 to FIG. 8 illustrate a threaded fastener 10 in the third embodiment is approximately similar to the threaded fastener 10 in the second embodiment in structure but features a difference that the threaded fastener 10 further includes a plurality of ribs 13a extending in the radial direction. In this embodiment, three ribs 13a are equidistantly and obliquely disposed on the peripheral surface 131 of the cone portion 13. In virtue of arrangement of ribs 13a, the cone portion 13 with which a workpiece is drilled invasively proves effective in cutting and reaming a hole that is opened trimly and expanded outward for no bulge at the squeezed workpiece surface and easy operation. The ribs 13a and the annular groove 12d, both of which cooperate with each other, prevent a workpiece from a bulge, contributing to fast cutting and reaming and accommodating waste chips. Moreover, the ribs 13a which are curved polygonally in structure and slantwise arranged on the peripheral surface 131 of the cone portion 13 cut and enlarge a hole based on two distinct cutting angles for fast reaming of a hole bored and ruptured invasively in the radial direction when a workpiece is intruded by the cone portion 13.

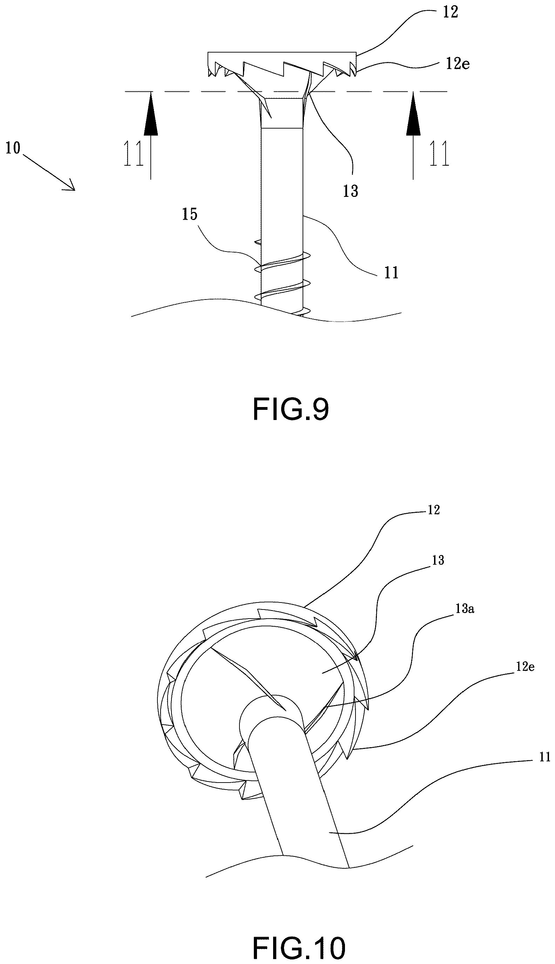

FIG. 9 to FIG. 11 illustrate a threaded fastener 10 according to a fourth embodiment of the present invention modified from the third embodiment. In this embodiment, the annular side wall 12c includes a serrated edge portion 12e for cutting a workpiece, splitting and crushing fibers of the workpiece, and further promoting fast cutting and reaming of the drilled hole.

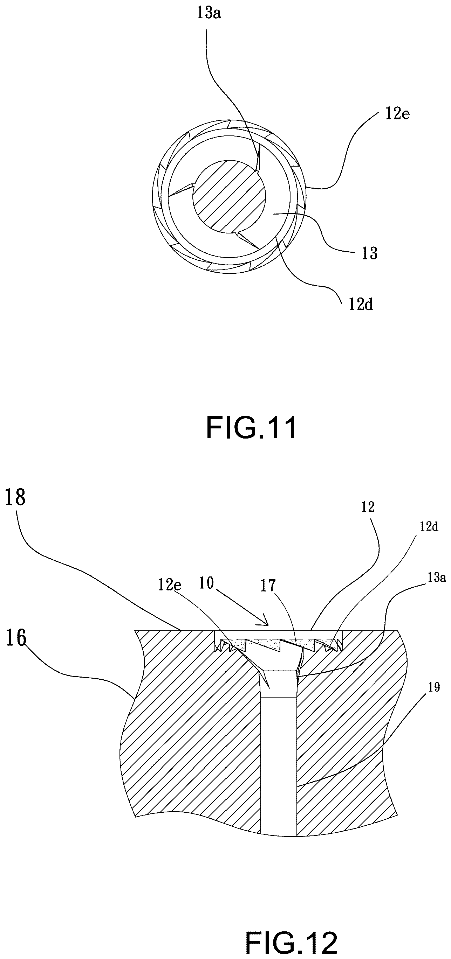

FIG. 12 is a schematic view illustrating the threaded fastener 10 is screwed in a workpiece 16. Because waste chips 17 in a hole 19 bored invasively are accommodated inside the annular groove 12d and any bulge on the squeezed workpiece surface 18 is restrained by both the serrated edge portion 12e and the ribs 13a on the cone portion 13, there is few bulge detected around the head 12 of the threaded fastener 10 on the workpiece surface 18 for good flatness of the workpiece.

The scope of the invention is to be indicated by the appended claims, rather than by the foregoing description, and all changes which come within the meaning and range of equivalency of the claims are intended to be embraced therein.

## Claims

1. A threaded fastener (10) comprising:
a head (12) including a top portion (12a);
a shank (11) extending from the head (12) and defining a longitudinal axis (L), with a thread (15) provided on the shank (11); and
a cone portion (13) formed between the shank (11) and the top portion (12a) and having a peripheral surface (131) tapering from the top portion (12a) to the shank (11),
wherein the head (12) further including an annular side wall (12c) extending downwardly from a periphery of the top portion (12a) along the longitudinal axis (L), with an annular groove (12d) created between the annular side wall (12c) of the head (12) and the cone portion (13) for development of an accommodating space with an opening (125) downward, with the annular groove (12d) surrounded by an inner surface (121) of the annular side wall (12c), the peripheral surface (131) of the cone portion (13), and a bottom wall (122) of the top portion (12a) connected between the annular side wall (12c) and the cone portion (13), wherein the bottom wall (122) of the top portion (12a) extends in a radial direction of the head (12) and separates the annular side wall (12c) from the cone portion (13).

2. The threaded fastener (10) according to claim 1, wherein the accommodating space in the annular groove (12d) has a trapezoid cross section.

3. The threaded fastener (10) according to claim 1, wherein the inner surface (121) of the annular side wall (12c) is developed as a slope, and an edge portion (12e) is formed at a lower end of the annular side wall (12c).

4. The threaded fastener (10) according to claim 1, wherein a serrated edge portion (12e) is formed at a lower end of the annular side wall (12c).

5. The threaded fastener (10) according to claim 1, wherein the peripheral surface (131) of the cone portion (13) is provided with a plurality of ribs (13a) extending in the radial direction.

6. The threaded fastener (10) according to claim 5, wherein the plurality of ribs (13a) are equidistantly and obliquely disposed on the peripheral surface (131) of the cone portion (13).

7. The threaded fastener (10) according to claim 5, wherein the plurality of ribs (13a) are curved polygonally in structure and slantwise arranged on the peripheral surface (131) of the cone portion (13).
